# EUROPÄISCHE PATENTSCHRIFT

(11) **EP 2 946 254 B1**
(45) Veröffentlichungstag und Bekanntmachung des Hinweises auf die Patenterteilung: **21.06.2017**
(21) Anmeldenummer: 13717256.5
(22) Anmeldetag: 16.04.2013
(51) Int. Cl.: G05B 19/05, G06F 9/44

(54) **SPEICHERPROGRAMMIERBARE STEUERUNG MIT GERINGER LATENZZEIT**
PROGRAMMABLE LOGIC CONTROLLER HAVING REDUCED LATENCY
COMMANDE À PROGRAMME ENREGISTRÉ À TEMPS DE LATENCE RÉDUIT

(43) Veröffentlichungstag der Anmeldung: 25.11.2015
(73) Patentinhaber: Siemens Aktiengesellschaft, 80333 München (DE)
(72) Erfinder: GRAF, Rene, 90513 Zirndorf (DE); WIECZOREK, Michael, 91056 Erlangen (DE)
(86) Internationale Anmeldenummer: PCT/EP2013/057854
(87) Internationale Veröffentlichungsnummer: WO 2014/169949

(56) Entgegenhaltungen:
- EP-A2- 2 381 326
- WO-A2-01/15384
- GB-A- 2 473 751
- US-A1- 2012 260 239

## Beschreibung

Die Erfindung betrifft eine speicherprogrammierbare Steuervorrichtung für eine Prozess- und/oder Fertigungsanlage, oder kurz Anlage. Die Steuervorrichtung kann über einen Feldbus mit einer Peripherie der Anlage verbunden sein, d.h. mit Sensoren und/oder Aktoren von beispielsweise Fließbändern und Automaten der Anlage. Zu der Erfindung gehört auch ein Verfahren zum Betreiben der speicherprogrammierbaren Steuervorrichtung. Schließlich gehören zu der Erfindung auch eine Solarthermikanlage und ein Computerprogrammprodukt. Die WO 01/15384 zeigt ein System und ein Verfahren zur Informationsübertragung zwischen Kommunikationsteilnehmern über einen Feldbus.

Die US2012/0260239 zeigt die Parallelisierung von PLC Programmen.

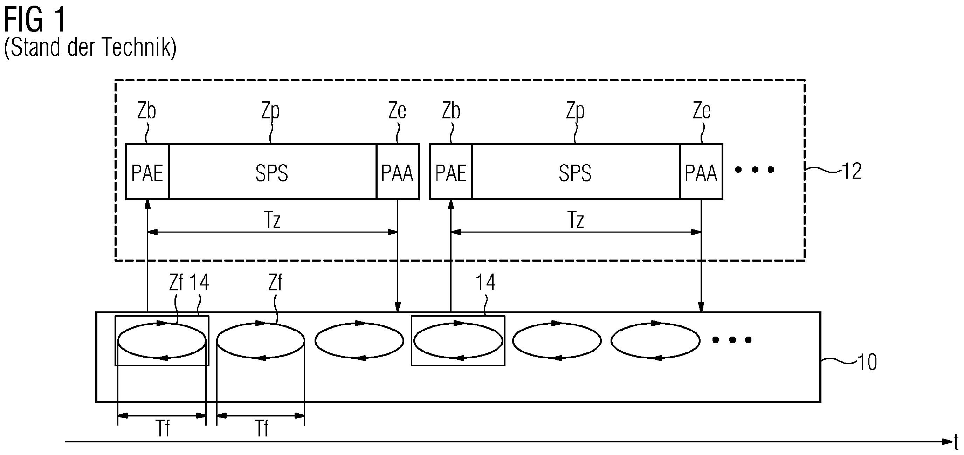

Im Gegensatz zu Programmen für einen Personalcomputer (PC) haben Programme für eine speicherprogrammierbare Steuerung einen genau festgelegten Aufbau. Dieser ist anhand von FIG 1 im Folgenden erläutert. In FIG 1 ist ein Ablaufdiagramm gezeigt, in welchem dargestellt ist, wie über der Zeit t ein Feldbus 10 in einzelnen Feldbuszyklen Zf jeweils einen aktuellen Eingangsdatensatz von einer (nicht dargestellten) Peripherie einer Anlage hin zu einer speicherprogrammierbaren Steuervorrichtung oder kurz Steuervorrichtung 12 überträgt. Die Steuervorrichtung 12 führt ein Steuerprogramm SPS für einen Regelalgorithmus der Anlage aus. Das Steuerprogramm SPS wird zyklisch ausgeführt, also ein Durchlauf nach dem anderen, wobei in FIG 1 zwei aufeinanderfolgende Programmzyklen Zp des Steuerprogramms SPS in ihrem Verlauf über der Zeit t repräsentiert sind.

Jeder Programmzyklus ZP beginnt mit dem Einlesen der Eingangsdaten der angeschlossenen Peripherie über den Feldbus. Hierzu kopiert die Steuervorrichtung 12 den jeweils aktuellen Eingangsdatensatz 14 vom Feldbus 10 in einen Eingangsspeicher für ein aktuelles Eingangsprozessabbild PAE. Danach kommt die Verarbeitung dieser Daten und am Ende werden die errechneten Ausgangsdaten wieder auf die Ausgangsspeicher geschrieben, von wo sie der Feldbus ausliest und wieder an die Peripherie überträgt. Der Speicher für die Eingangs- und Ausgangsdaten wird als Prozessabbild (PA) bezeichnet. Der Teil für die Eingangsdaten wird auch als PAE abgekürzt, der für die Ausgangsdaten analog als PAA. Aus dem Eingangsprozessabbild PAE wird also gemäß dem Regelalgorithmus durch das Steuerprogramm SPS während des Programmzyklus Zp ein Ausgangsdatensatz für ein Ausgangsspeicherbild PAA berechnet. Am Zyklusende Ze wird das Ausgangsprozessabbild PAA, d. h. der Datensatz mit den Stelldaten für die Peripherie, wieder an den Feldbus übergeben, welcher den Ausgangsdatensatz an Stelleinheiten der Peripherie überträgt, welche dann Aktoren einzelner Anlagenkomponenten ansteuern. Der Übergang zwischen einem Zyklusende zum nächsten Zyklusbeginn wird als Zyklus-Kontrollpunkt (ZKP) bezeichnet, der sich vor allem dadurch auszeichnet, dass volle Datenkonsistenz im Ausgangsspeicher PAA vorliegt, da alle Berechnungen abgeschlossen sind.

Der Feldbuszyklus, mit welchem die Peripherie nach ihren aktuellen Eingangsdaten gefragt beziehungsweise vorhandene, von der Steuervorrichtung berechnete Ausgangsdaten dort hin übermittelt werden, ist unabhängig von dem Programmzyklus Zp der Steuervorrichtung 12. Die Feldbuszykluszeit Tf ist die Zeit, die das System braucht, um alle aktuellen Eingangswerte, die von der Peripherie an den Feldbus übergeben werden, als ein aktueller Eingangsdatensatz in den Speicher der Steuervorrichtung als ein aktuelles Eingangsprozessabbild PAE zu kopieren und das dort liegende aktuelle Ausgangsprozessabbild PAE als Ausgangsdatensatz wieder an die Peripherie zu schreiben.

Ein Programm Zp dauert eine bestimmte Programmzykluszeit Tz. Diese ist größer als die Feldbuszykluszeit Tf, mit welcher der Feldbus 10 aktuelle Eingangsdatensätze am Dateneingang der Steuervorrichtung 12 aktualisiert. Allgemein gilt hierbei, dass Tf << Tz gilt. Größenordnungen, üblicher SPS-Programme und Konfigurationen sind dabei Tf < 50 ms und Tz < 1000 ms, so dass bis zur Reaktion auf eine Änderung eine unerwünscht lange Zeit vergehen kann.

Bei zentraler Peripherie kommt statt eines Feldbusses ein so genannter Rückwandbus zum Einsatz, der generell noch schneller als ein Feldbus arbeitet. Im Folgenden wird auf die beiden Bustypen, also einen Rückwandbus und einen Feldbus, sowie weitere, für eine SPS nutzbare Busse allgemein als Kommunikationsbus verwiesen.

Mit verschiedenen Methoden wird versucht, ein vorhandenes SPS-Programm so zu verändern, dass einzelne Teile davon parallel abgearbeitet werden können, so dass unter Verwendung eines Multi- oder gar Many-Core-Prozessors (Mehrkern-Prozessorsystem) ein Steuerprogramm viel schneller abläuft, ohne dass der Programmierer dies explizit ausprogrammieren muss.

Dabei ergeben sich allerdings erhebliche Probleme, weil die bisher sequentielle Bearbeitung eines Steuerprogramms gewisse Konstrukte erlaubt, die bei der parallelen Ausführung zu unvorhersehbaren Ergebnissen führen. Als Beispiel sei hier die Verwendung einer lokalen Variable (Merker) genannt, die in der verschiedenen Programmabschnitten immer wieder als Zwischenspeicher für verschiedene Berechnungen verwendet wird. In einem sequentiellen Steuerprogramm ist dies kein Problem. Bei der parallelen Ausführung einzelner Teile dieses Steuerprogramms entsteht eine implizite Kommunikation zwischen diesen einzelnen Teilen, da ein Programmteil des parallel ausgeführten Steuerprogramms die Variable beschreibt, während ein anderer Teil gerade diese Variable ausliest und somit einen falschen Wert bekommt. Dies wird auch als Data-Race bezeichnet.

Der Erfindung liegt die Aufgabe zugrunde, die Latenzzeit, mit welcher eine Steuervorrichtung auf eine Veränderung eines Eingangswerts einer Peripheriekomponente reagiert, zu verkürzen.

Die Aufgabe wird durch ein Verfahren gemäß Patentanspruch 1, eine Steuervorrichtung gemäß Patentanspruch 8, im Zusammenhang mit der Steuerung von Solarthermikanlagen durch eine Solarthermikanlage gemäß Patentanspruch 9 und im Zusammenhang mit der Ertüchtigung bereits vorhandener Steuervorrichtungen durch ein Computerprogrammprodukt gemäß Patentanspruch 10 gelöst. Vorteilhafte Weiterbildungen der Erfindung sind durch die Unteransprüche gegeben.

Das erfindungsgemäße Verfahren dient zum Betreiben einer speicherprogrammierbaren Steuervorrichtung, welcher in der bereits beschriebenen Weise durch einen Kommunikationsbus, also beispielsweise einen Rückwandbus oder einen Feldbus, zyklisch jeweils nach Ablauf einer Buszykluszeit ein aktueller Eingangsdatensatz mit Zustandsdaten einer Peripherie bereitgestellt wird. Dieser Eingangsdatensatz kann beispielsweise Sensordaten oder Werte von Zustandsparametern einzelner Peripheriekomponenten, also etwa der Sensoren oder von Aktorsteuerungen, umfassen. Bei dem Verfahren wird durch die Steuervorrichtung eine Programminstanz eines Steuerprogramms mit einem Regelalgorithmus zyklisch abgearbeitet oder ausgeführt. Im Folgenden ist diese Programminstanz als eine erste Programminstanz bezeichnet. In jedem Programmzyklus wird also von der ersten Programminstanz am Zyklusbeginn der aktuelle Eingangsdatensatz kopiert, während des Programmzyklus aus dem kopierten Eingangsdatensatz ein Ausgangsdatensatz mit Stelldaten für die Peripherie berechnet und am Zyklusende der Ausgangsdatensatz an den Kommunikationsbus zur Übertragung an die Peripherie übergeben. Das erfindungsgemäße Verfahren betrifft dabei die Situation, dass eine Programmzykluszeit Tz jedes Programmzyklus der Programminstanz größer als die Buszykluszeit Tf ist, so dass zwischen dem Zyklusbeginn und dem Zyklusende jedes Programmzyklus jeweils von dem Kommunikationsbus zumindest ein weiterer aktueller Eingangsdatensatz bereitgestellt wird, der nicht von der ersten Programminstanz berücksichtigt wird, weil diese ihren aktuellen Programmzyklus noch nicht beendet hat.

Bei dem erfindungsgemäßen Verfahren wird nun durch die Steuervorrichtung zumindest eine weitere Programminstanz des Steuerprogramms ausgeführt. Mit anderen Worten führt die Steuervorrichtung das Steuerprogramm mindestens zweimal zugleich aus, und zwar jede davon wiederum zyklisch. Die Programminstanzen werden dabei zeitlich verschränkt ausgeführt. Mit anderen Worten ist jede weitere Programminstanz zeitlich zu der ersten Programminstanz um weniger als die Programmzykluszeit Tz zeitlich versetzt. Mit anderen Worten gibt es zwischen dem Zyklusbeginn und dem Zyklusende der ersten Programminstanz zumindest einen weiteren Zyklusbeginn der zumindest einen weiteren Programminstanz. Wieder anders ausgedrückt sind die Zykluskontrollpunkte aller Programminstanzen zeitlich zueinander versetzt. Durch die zumindest eine weitere Programminstanz wird deshalb jeweils ein anderer derjenigen Eingangsdatensätze bearbeitet, die sich zwischen dem Zyklusbeginn und dem Zyklusende des Programmzyklus der ersten Programminstanz durch den Kommunikationsbus bereitgestellt werden.

Durch diesen neuen Ansatz für die Parallelisierung eines vorhandenen Steuerprogramms für einen Regelalgorithmus ergibt sich der Vorteil, dass sich der maximal mögliche Zeitversatz zwischen einer Änderung eines Eingangsdatums und der Ausgabe eines zugehörigen Stelldatums der Steuervorrichtung systematisch durch eine entsprechende Wahl der Anzahl der weiteren Programminstanzen verringern lässt. Im Gegensatz zu den Ansätzen und Verfahren, die ein vorhandenes Programm durch Analyse in parallelisierbare Abschnitte (Englisch: Threads) aufteilen, kann bei dem erfindungsgemäßen Verfahren die vorhandene Rechenleistung dazu genutzt, um das gleiche Steuerprogramm mehrfach, zeitlich versetzt parallel auszuführen.

Besonders vorteilhaft ist es, wenn die parallel abgearbeiteten Programminstanzen ihre jeweiligen Daten unabhängig von jeder anderen Programminstanz verarbeiten. Dann muss weder der Programmierer, noch das Engineering-System, noch das Runtime-System spezielle Vorkehrungen gegen für Parallelität falsche Programmierung treffen (data-race), da die einzelnen parallel laufenden Programminstanzen auf ihren eigenen Daten arbeiten und somit vollkommen unabhängig sind.

Bevorzugt wird ein Multi- oder Many-Core-Prozessor so genutzt, dass jeder Prozessorkern (Core) das gleiche Steuerprogramm, also eine jeweilige Programminstanz des Steuerprogramms, ausführt, aber mit einem gewissen zeitlichen Versatz zu einem "Nachbarn", also zur nächsten Programminstanz. Entsprechend wird bei einer Weiterbildung des Verfahrens in der Steuervorrichtung ein Mehrkern-Prozessorsystem bereitgestellt und jede Programminstanz durch einen anderen der Prozessorkerne dieses Mehrkern-Prozessorsystems abgearbeitet. Hierdurch ergibt sich der Vorteil, dass es keine Umschaltvorgänge zwischen den einzelnen Programminstanzen innerhalb eines einzelnen Prozessorkerns gibt, wodurch ansonsten der eingestellte zeitliche Versatz zwischen den Programminstanzen verändert werden könnte.

Das erfindungsgemäße Verfahren skaliert hierbei absolut linear mit der Anzahl der zur Verfügung stehenden Prozessorkerne (nicht signifikante Anlauf- sowie Stopp-Phasen nicht mit eingeschlossen). Eine sinnvolle Grenze ist erreicht, wenn bei N Prozessorkernen der Zeitversatz zwischen den Programminstanzen der Feldbuszykluszeit entspricht, also Tz = N*Tf. Gemäß einer Ausführungsform des Verfahrens ergibt sich eine sinnvolle automatische Konfiguration der Steuervorrichtung, wenn in einer Konfigurationsphase der Steuerungsvorrichtung, also beispielsweise nach dem Einschalten derselben, durch eine Analyseeinrichtung, wie etwa einem Programmmodul der Steuervorrichtung, die Programmzykluszeit Tz und die Buszykluszeit Tf ermittelt werden und in Abhängigkeit von den ermittelten Zeitwerten (Programmzykluszeit und Buszykluszeit) eine Anzahl und ein Zeitversatz der zumindest einen weiteren Programminstanz des Steuerprogramms zur ersten Programminstanz festgelegt werden. Eine Implementierung dieses Verfahrens kann einen sequenziellen Durchlauf des Steuerprogramms messen, daraus und aus der vorhandenen Anzahl N der Prozessorkerne den Zeitversatz berechnen und anschließend das Steuerprogramm mehrfach als einzelne Programminstanzen auf den zur Verfügung stehenden Prozessorkernen versetzt starten.

Anstelle der Anzahl der Prozessorkerne kann auch eine andere, beliebig festlegbare Höchstanzahl an Programminstanzen zum Berechnen des Zeitversatzes und der Anzahl der Programminstanzen zugrunde gelegt werden (z.B. max. 4 bei N=8 vorhandenen Prozessorkernen, wenn dies nützlich ist).

Eine andere Weiterbildung des Verfahrens sieht vor, dass die Programminstanzen dazu ausgelegt sind, solche Stelldaten, die während des Programmzyklus, d.h. vor dem Zyklusende, fertig berechnet worden sind, auch bereits vor dem Zyklusende an den Kommunikationsbus zur Übertragung an die Peripherie zu übergeben. Dann werden sie also nicht erst mit dem Ausgabedatensatz mit den endgültigen Ausgabedaten, sondern schon einen oder zwei oder sogar noch mehr Buszyklen früher an die Peripherie übertragen. Eine solche Optimierung des Steuerprogramms weist den Vorteil auf, dass die Latenzzeit auch dann noch weiter verringert werden kann, wenn weniger Prozesskerne zur Verfügung stehen, als nötig sind, um so viele Programminstanzen des Steuerprogramms auszuführen, wie es für die Abarbeitung jedes vom Feldbus bereitgestellten Eingangsdatensatzes theoretisch nötig wäre. Um ein Steuerprogramm in der beschriebenen Weise zu optimieren, ist eine Analyse des Steuerprogramms erforderlich. Es wird analysiert, wann ein Ausgangsdatum, also ein bestimmtes Stelldatum für die Peripherie, bereits während des Programmzyklus fertig berechnet ist und nicht mehr verwendet wird, insbesondere nicht durch Folgeberechnungen verändert wird. Dieses Stelldatum wird dann implizit zu diesem Zeitpunkt in den Speicher für das Ausgangsprozessabbild PAA des Kommunikationsbusses kopiert, sodass es beim nächsten Buszyklus an die Peripherie übertragen wird.

Eine andere Weiterbildung des Verfahrens betrifft eine Anbindung der Steuervorrichtung an ein externes Planungs- und/oder Bediensystem, wie beispielsweise ein Bediengerät (HMI - human machine interface, Mensch-Maschine-Scnnittstelle). Die Steuervorrichtung ist hierbei mit dem externen Planungs- und/oder Bediensystem über eine von einem von dem Busanschluss verschiedene Kommunikationsschnittstelle verbunden, also beispielsweise Internet-Netzwerkanbindung, oder über eine Inter-Prozess-Kommunikationsschnittstelle. Steuervorgaben, beispielsweise eine Sollgeschwindigkeit oder ein Sollstellwinkel, können so von dem externen System über die Kommunikationsschnittstelle empfangen und jeder parallel laufenden Programminstanz an deren Zyklus-Kontrollpunkt (ZKP) übergeben werden. Hierdurch bleibt bei der Parallelisierung durch Ausführung mehrerer Programme die volle Datenkonsistenz zwischen den Programminstanzen nach Empfang der Steuervorgaben erhalten.

Für eine Leseanfrage des externen Systems gibt es zwei Möglichkeiten. Wird über die Kommunikationsschnittstelle zumindest eine Ausleseanforderung zum Ausgeben des aktuellen Ausgangsdatensatzes und/oder des aktuellen Reglerzustands empfangen, werden durch die Steuervorrichtung die angeforderten Ausgabedaten am Ende des zeitlich unmittelbar nachfolgenden Zyklusendes entweder einer fest vorbestimmten Programminstanz oder derjenigen Programminstanz ausgegeben, deren Programmzyklus als nächstes endet. Die Ausgabe erfolgt hierbei über die Kommunikationsschnittstelle. Mit anderen Worten wird also entweder einer der parallel laufenden Programmzyklen als Master definiert und immer nur dessen Ausgabedaten nach außen an das externe System gemeldet, oder die Leseanfrage wird an dem ZKP ausgeführt, der als nächstes auf einer beliebigen Programminstanz erreicht wird.

Wie bereits ausgeführt gehört zu der Erfindung auch eine Steuervorrichtung für eine Prozess- und/oder Fertigungsanlage. Die erfindungsgemäße Steuervorrichtung weist einen Busanschluss zum Austauschen von Eingangs- und Ausgangsdatensätzen mit einer Peripherie der Anlage zu einem Kommunikationsbus und ein Prozessorsystem auf. Das Prozessorsystem ist zum Ausführen von Programminstanzen eines Steuerprogramms ausgelegt, durch welches ein Regelalgorithmus für die Peripherie realisiert ist. Bevorzugt weist das Prozessorsystem mehrere Prozessorkerne auf. Die erfindungsgemäße Steuervorrichtung ist dazu ausgelegt, Ausführungsformen des erfindungsgemäßen Verfahrens durchzuführen.

Eine Anlage, die von dem erfindungsgemäßen Verfahren profitieren kann, ist beispielsweise eine Solarthermikanlage. Bei diesem Typ Anlage sind Spiegel, die Sonnenlicht bündeln, dem Sonnenstand nachzuführen. Die Zahl der Spiegel ist verhältnismäßig hoch, sodass die Programmzykluszeit eines Steuerprogramms zum Regeln der Spiegelstellungen erheblich über der Zeit eines Feldbusses liegt, also der Buszykluszeit. In diesem Zusammenhang sieht eine erfindungsgemäße Solarthermikanlage vor, die Peripherieanlage, also die nachführbar ausgestalteten Spiegel, mit einer zentralen Steuervorrichtung über einen Kommunikationsbus zu koppeln, wobei die Steuervorrichtung eine Ausführungsform der erfindungsgemäßen Steuervorrichtung ist. Durch die Steuervorrichtung wird eine jeweilige Stellung der Spiegel durch das Steuerprogramm in Abhängigkeit von einem Sonnenstand eingestellt. Jede Instanz des Steuerprogramms regelt hierbei die Spiegelstellung mehrerer, insbesondere aller, Spiegel. Dennoch ergibt sich hierdurch keine unerwünscht große Latenzzeit, da durch die Anzahl der Programminstanzen eingestellt werden kann, wie viel Buszyklen es höchstens braucht, bis ein Ausgangsdatensatz zu einer Veränderung von Eingangsdaten bereitsteht.

Im Zusammenhang mit der Solarthermikanlage ist das Berechnen von Ausgangsdaten nur von externen Werten, nämlich dem Sonnenstand und gegebenenfalls weiteren Umgebungswerten, abhängig. Deshalb kann das Steuerprogramm sehr einfach parallelisiert werden, indem einfach mehrere Programminstanzen zeitversetzt parallel ausgeführt werden. Dies erlaubt es, die Güte der Spiegelnachführung deutlich zu verbessern.

Um eine herkömmliche Steuervorrichtung ebenfalls im Sinne des erfindungsgemäßen Verfahrens zu ertüchtigen, sieht das erfindungsgemäße Computerprogrammprodukt einen Computerprogrammcode vor, der auf zumindest einem Speichermedium, also einer Festplatte oder einer CD-Rom, gespeichert ist. Der Programmcode ist dazu ausgelegt, bei Ausführen durch ein Prozessorsystem eine Steuervorrichtung für eine Prozess- und/oder Fertigungsanlage eine Ausführungsform des erfindungsgemäßen Verfahrens durchzuführen.

Im Folgenden ist die Erfindung noch einmal genau anhand eines konkreten Ausführungsbeispiels erläutert. Hierzu zeigt:
- FIG 1: ein Diagramm mit einem zeitlichen Ablauf von Berechnungs- und Übertragungsvorgängen in einer Anlage gemäß dem Stand der Technik,
- FIG 2: ein Diagramm mit einem zeitlichen Ablauf einer Verarbeitung einer Datenänderung in der Anlage von FIG 1 und
- FIG 3: ein Diagramm mit einem zeitlichen Ablauf von Übertragungs- und Berechnungsvorgängen, wie sie sich in einer Anlage ergeben, die eine Ausführungsform der erfindungsgemäßen Steuervorrichtung aufweist.

Bei dem im Folgenden erläuterten Ausführungsbeispiel stellen die beschriebenen Komponenten in der Ausführungsform und die beschriebenen Schritte des Verfahrens jeweils einzelne, unabhängig voneinander zu betrachtende Merkmale der Erfindung dar welche die Erfindung jeweils auch unabhängig voneinander weiterbilden und damit auch einzeln oder in einer anderen als der gezeichneten Kombination als Bestandteil der Erfindung zu sehen sind. Des Weiteren sind die beschriebenen Ausführungsformen auch durch weitere der bereits beschriebenen Merkmale der Erfindung begrenzbar.

Die dargestellte Ausführungsform stellt eine bevorzugte Ausführungsform der Erfindung dar.

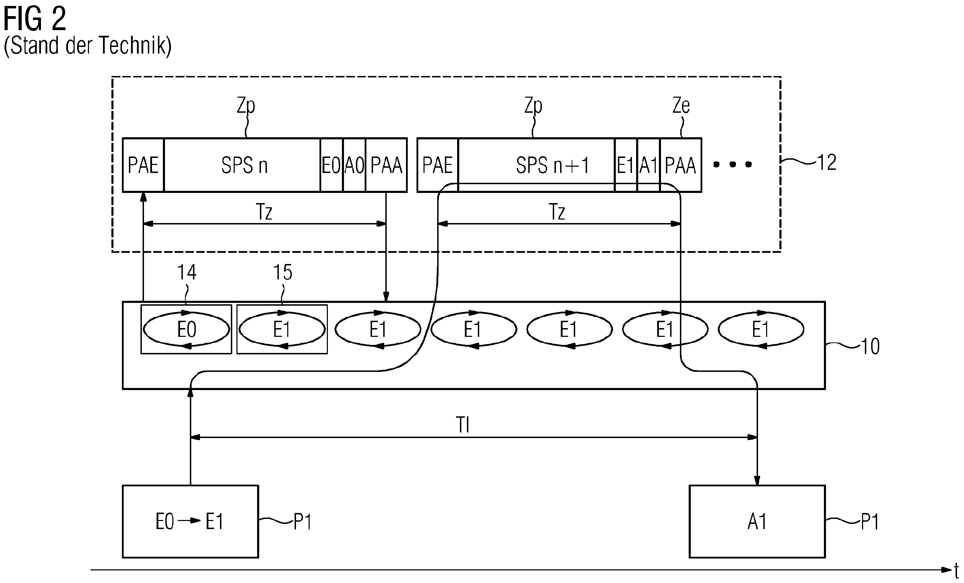

Anhand von FIG 2 ist zunächst erläutert, wie insgesamt bei einer speicherprogrammierbaren Steuerung aus dem Stand der Technik eine Latenz zwischen einer Änderung in der Peripherie und einer zugehörigen Reaktion der durch die SPS realisierten Regelung entstehen kann, die bis nahezu das doppelte der Programmzykluszeit betragen kann. In Fig. 2 ist dazu noch einmal das aus dem Stand der Technik bekannt System gezeigt, wie es in FIG 1 gezeigt ist.

Das Einlesen der Eingangsdaten für einen einzelnen Programmzyklus des Steuerprogramms der SPS wird vom Zyklusbeginn durch kopieren des aktuellen Inhalts des vom Feldbus geschriebenen Eingangsdatenspeicher PAE erstellt und die Kopie dient dann als Grundlage für alle Berechnungen des Ausgangsdatensatzes, aus dem dann ein zu diesem Programmzyklus gehörendes Ausgangsprozessbild PAA entsteht. Dieses wird aber erst am Zyklusende, also nach einer Programmzykluszeit Tz an den Feldbus übergeben, so dass dieser die Ausgangswerte an die Peripherie schreibt. Zwischen einem aktuellen Eingangsdatensatz und den zugehörigen durch den Regelalgorithmus des Steuerprogramms berechneten Ausgangsdatensatz besteht somit eine Latenzzeit, die der Programmzykluszeit entspricht (Übertragungszeiten über den Feldbus nicht mitgerechnet).

In FIG 2 ist zusätzlich eine Peripheriekomponente P1 der Anlage gezeigt, die beispielsweise einen Sensor umfassen kann, welcher einen Sensorwert als ein Eingangsdatum für die Eingangsdatensätze an den Feldbus 10 abgibt. Zu einem in der FIG 2 entlang des Zeitstrahls der Zeit t markierten Zeitpunkt ändert sich der Sensorwert von einem Eingangswert E0 zu einem Eingangswert E1. Der Feldbus 10 überträgt den geänderten Sensorwert als Bestandteil eines Eingangsdatensatzes 15 und der darauf folgenden Eingangsdatensätze an die Steuervorrichtung 12.

Wie in FIG 2 gezeigt ist, hat die Steuervorrichtung 12 unmittelbar vor dem Eintreffen des Eingangsdatensatzes 15 einen Eingangsdatensatz 14 für die Bearbeitung durch einen Programmzyklus Zp als ein Eingangsprozessabbild PAE in den Eingangsspeicher kopiert und mit der Berechnung eines Ausgangsdatensatzes begonnen. Dieser Programmzyklus Zp ist hier mit dem Index n gekennzeichnet. Da hier der aktuelle Eingangsdatensatz 14 unmittelbar vor Eintreffen des Eingangsdatensatzes 15 eingelesen wurde, wird der Eingangswert E0 für die Berechnung eines zugehörigen Stellwerts A0, welcher einen Ausgangswert des Ausgangsdatensatzes bildet, verwendet. Erst mit dem nächsten Programmzyklus Zp, der hier den Index n + 1 aufweist, wird der geänderte Eingangswert E1 zur Berechnung eines zugehörigen Stellwerts A1 verwendet. Erst am Zyklusende Ze des Programmzyklus' Zp mit der Indexnummer n + 1 wird dann der Stellwert A1 zu dem geänderten Eingangswert E1 an den Feldbus 10 abgegeben, so dass er an der beispielsweise an der Peripheriekomponente P1 mit einer Latenzzeit oder Zeitverzögerung Tl ankommt. Aus Sicht der Peripheriekomponente P1 ergibt sich somit eine Latenzzeit oder Verzögerung Tl, die im ungünstigsten Fall nahezu das Zweifache der Programmzykluszeit Tz betragen kann.

Jede Änderung eines Eingangswerts an einer Peripheriekomponente wird also immer mit der Buszykluszeit Tf (also in einem Zeitraum Tf) an die Steuervorrichtung 12 übertragen. Dort wird der neue Wert E1 aber erst mit Beginn eines nächsten Programmzyklus' Zp berücksichtigt, wenn die Kopie des nächsten Eingangsprozessabbildes PAE erstellt wird. Die Verarbeitung der Eingangsdaten erfolgt dann in diesem Programmzyklus Zp (hier Index n + 1), so dass der vorangegangene Programmzyklus Zp (hier Index n), der den alten Eingangswert E0 verarbeitet, zwar nach der Änderung des Eingangswerts (E0 -> E1) bearbeitet wird, aber dennoch nicht den veränderten Wert E1 zugrunde legt.

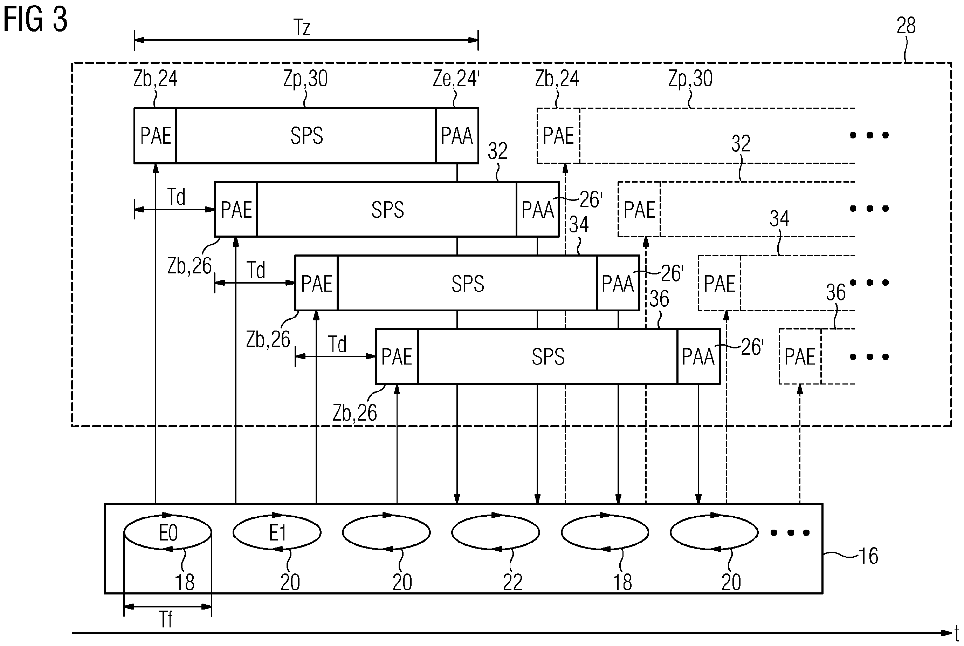

In FIG 3 ist veranschaulicht, wie bei einer Ausführungsform des erfindungsgemäßen Verfahrens in einer Ausführungsform der erfindungsgemäßen Steuervorrichtung mit der Zeit t in einem Feldbus von einem Kommunikationsbus 16 in einzelnen Buszyklen 18, 20, 22 jeweils aktuelle Eingangsdatensätze 24, 26 aus dem Feldbus 16 als ein Eingangsprozessabbild PAE in eine Steuervorrichtung 28 kopiert werden. Durch die Steuervorrichtung 28 werden mehrere Programminstanzen 30, 32, 34, 36 desselben Steuerprogramms SPS ausgeführt. Mit anderen Worten laufen mehrere Steuerprogramme mit dem selben Steuerprogrammtext zeitlich parallel ab. Die Programminstanzen werden dabei jeweils zyklisch ausgeführt, also immer wiederholt. Jede Programminstanz 30, 32, 34, 36 kann beispielsweise durch einen eigenen Prozessorkern des Prozessorsystems der Steuervorrichtung 28 ausgeführt werden.

In jedem Programmzyklus Zp wird durch die Programminstanz 30 ein Eingangsdatensatz 24 zum Zyklusbeginn Zb vom Feldbus 16 als Eingangsprozessorbild PAE in einen Speicher der Steuervorrichtung 28 kopiert, während des Programmzyklus Zp daraus in der beschriebenen Weise Stelldaten als Ausgangsdatensatz 24' berechnet und am Zyklusende Ze das so erzeugte Ausgangsprozessabbild PAA nach einer Programmzykluszeit Tz an den Feldbus 16 ausgegeben, welcher den Ausgangsdatensatz 24' in der beschriebenen Weise an Peripheriegeräte überträgt. Beispielsweise kann durch die Steuervorrichtung 28 die beschriebene Solarthermikanlage gesteuert werden. Die Programmzykluszeit Tz ist größer als die Buszykluszeit Tf. In FIG 3 ist wie in FIG 2 wieder gezeigt, dass in zwei aufeinanderfolgenden Feldbuszyklen durch den jeweils aktuellen Eingangsdatensatz zunächst ein Eingangswert E0 und anschließend ein Eingangswert E1 zur Steuervorrichtung 28 übertragen wird. Anders als im Beispiel von FIG 2 wird die Änderung des Eingangsdatums auf den Wert E1 durch eine der weiteren Programminstanzen 32 sofort zur Berechnung eines entsprechend angepassten Ausgangsdatensatzes 26' herangezogen.

Die Programminstanzen 30, 32, 34, 36 sind hierzu um einen Zeitversatz Td zueinander versetzt durch die Steuervorrichtung 28 gestartet worden. Der Zeitversatz Td ist kleiner als die Programmzykluszeit Tz. Die Programminstanzen 30, 32, 34, 36 laufen also zeitlich verschränkt parallel zueinander ab. In dem gezeigten Beispiel läuft der Steuerzyklus viermal parallel z.B. auf vier verschiedenen Prozessorkernen ab. Mit anderen Worten gibt es vier Programminstanzen 30, 32, 34, 36. Bei jedem Start eines Zyklus wird der aktuelle Eingangsdatensatz 24, 26 des jeweiligen Feldbuszyklus 18, 20, 22 als Eingangsprozessabbild PAE in den Speicher der Steuervorrichtung kopiert und verarbeitet. Dadurch erhöht sich die Abtastrate der Steuervorrichtung 28 betreffend die Eingangsdatensätze, die vom Feldbus 16 bereitgestellt werden. Dies erhöht die Qualität bzw. die Anzahl der Berechnungen neuer, aktueller Ausgangsdatensätze 24', 26' . Damit werden die Ausgangsdatensätze entsprechend schneller an die in Veränderung der Eingangswerte (im Beispiel E0 zu E1) angepasst und schneller passende Ausgangsdatensätze mit geeigneten Stellwerten an die Peripherie übertragen. In dem gezeigten Beispiel wird z.B. unmittelbar nachdem die Programminstanz 30 zu dem Eingangswert E0 einen Ausgangswert in einem Feldbuszyklus 22 ausgegeben hat, mit dem Zeitversatz Td durch die nächste Programminstanz 32, die als erste den geänderten Eingangswert E1 erfasst hat, ein geeigneter Ausgangswert zum geänderten Eingangswert E1 an den Feldbus 16 ausgegeben.

### Bezugszeichenliste

- 10: Feldbus
- 12: Standard-Steuervorrichtung
- 14: Eingangsdatensatz
- 16: Kommunikationsbus
- 18, 20, 22: Feldbuszyklus
- 24, 26: Eingangsdatensatz
- 24', 26': Ausgangsdatensatz
- 28: Steuervorrichtung
- 30, 32, 34, 36: Programminstanz

- SPS: Steuerprogramm
- t: Zeit
- Td: Zeitversatz
- Tf: Buszykluszeit
- Tz: Programmzykluszeit
- Zb: Zyklusbeginn
- Ze: Zyklusende
- Zp: Programmzyklus

## Patentansprüche

1. Verfahren zum Betreiben einer speicherprogrammierbaren Steuervorrichtung (28), der durch einen Kommunikationsbus (16) zyklisch jeweils nach Ablauf einer Buszykluszeit (Tf) ein aktueller Eingangsdatensatz (24, 26) mit Zustandsdaten einer Peripherie bereitgestellt wird, wobei bei dem Verfahren durch die Steuervorrichtung eine erste Programminstanz (30) eines Steuerprogramms (SPS) zyklisch abgearbeitet wird und in jedem Programmzyklus (Zp) von der ersten Programminstanz (30) am Zyklusbeginn (Zb) der dann jeweils bereitgestellte aktuelle Eingangsdatensatz (24) kopiert, dann während des Programmzyklus (Zp) aus dem kopierten Eingangsdatensatz (24) ein Ausgangsdatensatz (24') mit Stelldaten für die Peripherie berechnet und am Zyklusende der Ausgangsdatensatz (24') an den Kommunikationsbus (16) zur Übertragung an die Peripherie übergeben wird, wobei eine Programmzykluszeit (Tz) des Programmzyklus (Zp) größer als die Buszykluszeit (Tf) ist, sodass zwischen dem Zyklusbeginn (Zb) und dem Zyklusende (Ze) des Programmzyklus (Zp) der ersten Programminstanz (30) jeweils von dem Kommunikationsbus (16) zumindest ein weiterer aktueller Eingangsdatensatz (26) bereitgestellt wird, der nicht von der ersten Programminstanz (30) berücksichtigt wird, weil diese ihren Programmzyklus (Zp) noch nicht beendet hat,
**dadurch gekennzeichnet, dass**
durch die Steuervorrichtung (28) zumindest eine weitere Programminstanz (32, 34, 36) des Steuerprogramms (SPS) zeitlich um weniger als eine Programmzykluszeit (Tz) versetzt zur ersten Programminstanz (30) zyklisch abgearbeitet wird und durch die zumindest eine weitere Programminstanz (32, 34, 36) jeweils ein anderer derjenigen Eingangsdatensätze (26) verarbeitet wird, die zwischen dem Zyklusbeginn (Zb) und dem Zyklusende (Ze) des Programmzyklus (Zp) der ersten Programminstanz (30) durch den Kommunikationsbus (16) bereitgestellt werden, wobei in der Steuervorrichtung (28) ein Mehrkern-Prozessorsystem bereitgestellt ist und jede Programminstanz (30, 32, 34, 36) durch einen anderen der Prozessorkerne abgearbeitet wird.

2. Verfahren nach Anspruch 1, wobei durch die parallel abgearbeiteten Programminstanzen (30, 32, 34, 36) ihre jeweiligen Daten (24, 26) unabhängig von jeder anderen Programminstanz (30, 32, 34, 36) verarbeitet werden.

3. Verfahren nach einem der vorhergehenden Ansprüche, wobei in einer Konfigurationsphase der Steuervorrichtung (28) durch eine Analyseeinrichtung die Programmzykluszeit (Tz) und die Buszykluszeit (Tf) ermittelt werden und in Abhängigkeit von den ermittelten Zeitwerten (Tz, Tf) eine Anzahl und ein Zeitversatz (Td) der zumindest einen weiteren Programminstanz (32, 34, 36) zur ersten Programminstanz (30) festgelegt werden.

4. Verfahren nach Anspruch 3, wobei die festgelegte Anzahl zusätzlich von einer Anzahl verfügbarer Rechenkerne eines Mehrkern-Prozessorsystems der Steuervorrichtung und/oder der Zeitversatz (Td) für eine gleichmäßige Aufteilung der Programminstanzen (30, 32, 34, 36) über der Zeit (t) festgelegt wird.

5. Verfahren nach einem der vorhergehenden Ansprüche, wobei das Steuerprogramm (SPS) dazu ausgelegt sind, während eines Programmzyklus (Zp) fertig berechnete Stelldaten bereits vor dem Zyklusende (Ze) an den Kommunikationsbus zur Übertragung an die Peripherie übergeben werden.

6. Verfahren nach einem der vorhergehenden Ansprüche, wobei mit einem externen Planungs- und/oder Bediensystem über eine von einem Busanschluss verschiedene Kommunikationsschnittstelle zumindest eine Ausleseanforderung zum Ausgeben des aktuellen Ausgangssatzes (24', 26') und/oder des aktuellen Reglerzustands empfangen werden und durch die Steuervorrichtung (28) die angeforderten Ausgabedaten am Ende des zeitlich unmittelbar nachfolgenden Zyklusende (Ze) a) einer fest vorbestimmten Programminstanz (30) oder b) derjenigen Programminstanz (30, 32, 34, 36), deren Programmzyklus (Zp) als nächstes endet, über die Kommunikationsschnittstelle ausgegeben werden.

7. Steuervorrichtung (28) für eine Prozess- und/oder Fertigungsanlage, mit einem Busanschluss zum Austauschen von Eingangs- und Ausgangsdatensätzen (24, 26, 24', 26') mit einer Peripherie der Anlage über einen Kommunikationsbus (16) und mit einem Prozessorsystem zum Ausführen von Programminstanzen (30, 32, 34, 36) eines Steuerprogramms (SPS), wobei die Steuervorrichtung (28) dazu ausgelegt ist, ein Verfahren nach einem der vorhergehenden Ansprüche durchzuführen.

8. Solarthermikanlage mit einer Vielzahl von nachführbar ausgestalteten Spiegeln, welche eine Peripherie der Anlage darstellen, und mit einer zentralen Steuervorrichtung (28) nach Anspruch 7, welche über einen Kommunikationsbus (16) mit der Peripherie gekoppelt ist und welche dazu ausgelegt ist, eine jeweilige Stellung der Spiegel durch das Steuerprogramm (SPS) in Abhängigkeit von einem Sonnenstand einzustellen.

9. Computerprogrammprodukt mit einem auf zumindest einem Speichermedium gespeicherten Programmcode, welcher dazu ausgelegt ist, bei Ausführen des Programmcodes durch ein Prozessorsystem einer Steuervorrichtung (28) für eine Prozess- und/oder Fertigungsanlage ein Verfahren nach einem der Ansprüche 1 bis 7 durchzuführen.

## Claims

1. Method for operating a programmable logic control apparatus (28) that is provided with a current input data record (24, 26) having state data from a peripheral area by a communication bus (16) cyclically whenever a bus cycle time (Tf) has elapsed, wherein the method involves the control apparatus cyclically executing a first program instance (30) of a control program (SPS) and, in each program cycle (Zp), the first program instance (30) copying, at the cycle beginning (Zb), the current input data record (24) that is then provided in each case, then an output data record (24') having control data of the peripheral area being computed from the copied input data record (24) during the program cycle (Zp) and, at the cycle end, the output data record (24') being transferred to the communication bus (16) for transmission to the peripheral area, wherein a program cycle time (Tz) of the program cycle (Zp) is longer than the bus cycle time (Tf), so that, between the cycle beginning (Zb) and the cycle end (Ze) of the program cycle (Zb), the first program instance (30) is provided with at least one further current input data record (26) by the communication bus (16) in each case, said further current input data record being ignored by the first program instance (30) because the latter has not yet terminated its program cycle (Zp),
**characterized in that**
the control apparatus (28) cyclically executes at least one further program instance (32, 34, 36) of the control program (SPS) with a timing shift of less than one program cycle time (Tz) with respect to the first program instance (30), and the at least one further program instance (32, 34, 36) processes in each case a different one of those input data records (26) that are provided for the first program instance (30) by the communication bus (16) between the cycle beginning (Zb) and the cycle end (Ze) of the program cycle (Zp), wherein a multicore processor system is provided in the control apparatus (28) and each program instance (30, 32, 34, 36) is executed by a different one of the processor cores.

2. Method according to Claim 1, wherein the program instances (30, 32, 34, 36) executed in parallel process their respective data (24, 26) independently of any other program instance (30, 32, 34, 36).

3. Method according to one of the preceding claims, wherein in a configuration phase for the control apparatus (28) an analysis device ascertains the program cycle time (Tz) and the bus cycle time (Tf) and the ascertained time values (Tz, Tf) are taken as a basis for stipulating a number and a timing shift (Td) for the at least one further program instance (32, 34, 36) with respect to the first program instance (30).

4. Method according to Claim 3, wherein the stipulated number is additionally stipulated by a number of available computation cores in a multicore processor system of the control apparatus and/or the timing shift (Td) is stipulated for even distribution of the program instances (30, 32, 34, 36) over time (t).

5. Method according to one of the preceding claims, wherein the control program (SPS) is designed to transfer control data that have been computed in full during a program cycle (Zp) to the communication bus before the actual cycle end (Ze) for the purpose of transmission to the peripheral area.

6. Method according to one of the preceding claims, wherein an external planning and/or operator control system is used to receive, via a communication interface that is different than a bus port, at least one read request for output of the current output record (24', 26') and/or the current controller state, and the control apparatus (28) uses the communication interface to output the requested output data a) to a firmly predetermined program instance (30) or b) to that program instance (30, 32, 34, 36) whose program cycle (Zp) ends next at the end of the cycle end (Ze) that immediately follows in time.

7. Control apparatus (28) for a process and/or production installation, having a bus port for interchanging input and output data records (24, 26, 24', 26') with a peripheral area of the installation via a communication bus (16) and having a processor system for executing program instances (30, 32, 34, 36) of a control program (SPS), wherein the control apparatus (28) is designed to perform a method according to one of the preceding claims.

8. Solar heat installation having a multiplicity of mirrors of repositionable design that represent a peripheral area of the installation, and having a central control apparatus (28) according to Claim 7 that is coupled to the peripheral area via a communication bus (16) and that is designed to set a respective position for the mirrors using the control program (SPS) on the basis of a position of the sun.

9. Computer program product having a program code that is stored on at least one storage medium and that is designed to perform a method according to one of Claims 1 to 7 when the program code is executed by a processor system of a control apparatus (28) for a process and/or production installation.

## Revendications

1. Procédé destiné à l'exploitation d'un dispositif de commande à programme enregistré (28) à la disposition duquel est mis par le biais d'un bus de communication (16) de manière cyclique respectivement après l'écoulement d'un temps de cycle de bus (Tf) un jeu de données entrantes effectif (24, 26) avec des données d'état d'un équipement périphérique, dans lequel avec le procédé une première instance de programme (30) d'un programme (SPS) est prise en charge de manière cyclique par le biais du dispositif de commande et dans chaque cycle de programme (Zp) le jeu de données entrantes effectif (24) ainsi respectivement mis à disposition est copié par la première instance de programme (30) au début de cycle (Zb), puis pendant le cycle de programme (Zp) un jeu de données sortantes (24') à partir du jeu de données entrantes (24) est calculé pour l'équipement périphérique et à la fin du cycle le jeu de données sortantes (24') est transmis au bus de communication (16) pour la transmission à l'équipement périphérique, dans lequel un temps de cycle de programme (Tz) du cycle de programme (Zp) est plus long que le temps de cycle de bus (Tf), de sorte que, entre le début de cycle (Zb) et la fin de cycle (Ze) du cycle de programme (Zp) de la première instance de programme (30) au moins un jeu de données entrantes effectif (26) supplémentaire est respectivement mis à disposition par le bus de communication (16), lequel jeu de données entrantes n'est pas pris en compte par la première instance de programme (30) parce qu'elle n'a pas encore terminé son cycle de programme (Zp),
**caractérisé en ce que**
par le biais du dispositif de commande (28) au moins une instance de programme (32, 34, 36) supplémentaire du programme de commande (SPS) est prise en charge de manière cyclique par rapport à la première instance de programme (30) avec un décalage temporel d'une durée inférieure à un temps de cycle de programme (Tz) et par le biais de l'au moins une instance de programme (32, 34, 36) supplémentaire est traité respectivement un autre de ces jeux de données entrantes (26) qui sont mis à disposition entre le début de cycle (Zb) et la fin de cycle (Ze) du cycle de programme (Zp) de la première instance de programme (30) par le biais du bus de communication (16), dans lequel dans le dispositif de commande (28) est mis à disposition un système de processeur à plusieurs coeurs et chaque instance de programme (30, 32, 34, 36) est prise en charge par le biais d'un autre des coeurs de processeur.

2. Procédé selon la revendication 1, dans lequel par le biais des instances de programme (30, 32, 34, 36) prises en charge parallèlement leurs données respectives (24, 26) sont traitées indépendamment de chaque autre instance de programme (30, 32, 34, 36).

3. Procédé selon l'une des revendications précédentes, dans lequel dans une phase de configuration du dispositif de commande (28) par le biais d'un équipement d'analyse le temps de cycle de programme (Tz) et le temps de cycle de bus (Tf) sont déterminés et en fonction des valeurs de temps déterminées (Tz, Tf) un nombre et un décalage temporel (Td) de l'au moins une instance de programme (32, 34, 36) supplémentaire par rapport à la première instance de programme (30) sont établis.

4. Procédé selon la revendication 3, dans lequel le nombre établi est en outre établi par un nombre de coeurs de calcul disponibles d'un système de processeur à plusieurs coeurs du dispositif de commande et/ou le décalage temporel (Td) est établi pour une répartition égale des instances de programme (30, 32, 34, 36) dans le temps (t).

5. Procédé selon l'une des revendications précédentes, dans lequel le programme de commande (SPS) est adapté de façon à ce que pendant un cycle de programme (Zp) des données d'état déjà calculées soient transmises avant la fin de cycle (Ze) au bus de communication à des fins de transmission à l'équipement périphérique.

6. Procédé selon l'une des revendications précédentes, dans lequel avec un système de planification et/ou de fonctionnement externe par l'intermédiaire d'une interface de communication différente d'une connexion de bus au moins une demande de sélection destinée à la sortie du jeu de données sortantes effectif (24', 26') et/ou de l'état de régulateur effectif est reçue et par le biais du dispositif de commande (28) les données sortantes demandées à la fin de la fin de cycle (Ze) qui suit immédiatement a) d'une instance de programme (30) prédéfinie de manière fixe ou b) de l'instance de programme (30, 32, 34, 36) dont le cycle de programme (Zp) s'arrête immédiatement après sont sorties par l'intermédiaire de l'interface de communication.

7. Dispositif de commande (28) pour une installation de traitement et/ou de production, avec une connexion de bus destinée à l'échange de jeux de données entrantes et sortantes (24, 26, 24', 26') avec un équipement périphérique de l'installation par l'intermédiaire d'un bus de communication (16) et avec un système de processeur destiné à l'exécution d'instances de programme (30, 32, 34, 36) d'un programme de commande (SPS), dans lequel le dispositif de commande (28) est adapté pour réaliser un procédé selon l'une des revendications précédentes.

8. Installation thermique solaire avec une pluralité de miroirs conçus pour être asservis, lesquels représentent un équipement périphérique de l'installation, et avec un dispositif de commande central (28) selon la revendication 7, lequel est couplé à l'équipement périphérique par l'intermédiaire d'un bus de communication (16) et est adapté pour régler une position respective des miroirs par le biais du programme de commande (SPS) en fonction d'une position du soleil.

9. Produit de programme informatique avec un code de programme enregistré sur au moins un support d'enregistrement, lequel code de programme est adapté pour réaliser lors de l'exécution du code de programme un procédé selon l'une des revendications 1 à 7 par le biais d'un système de processeur d'un dispositif de commande (28) pour une installation de traitement et/ou de production.
